# EUROPEAN PATENT APPLICATION

(11) **EP 4 851 540 A1**
(43) Date of publication of application: **09.12.2026**
(21) Application number: 26182039.3
(22) Date of filing: 29.05.2026
(51) Int. Cl.: F24D 11/00, E04H 7/20, F16J 12/00, F28D 20/00

(54) **HEATING PLANT WITH THERMAL ENERGY STORAGE**

(30) Priority: 04.06.2025 PL 45223925
(71) Applicant: Chess Solutions Spolka Akcyjna, 88-100 Inowroclaw (PL)
(72) Inventor: KAPTUR, Ryszard, 88-170 Lacko (PL); SLOWIKOWSKI, Daniel, 42-450 Lazy (PL); BARTOSZEK, Zygmunt, 32-064 Rudawa (PL); OHL, Marian, 41-935 Bytom (PL); MAZUR, Tomasz, 03-984 Warszawa (PL)
(74) Representative: Lech, Wojciech

(57) **Abstract**

The subject of the invention is a heating plant with a thermal energy storage system, comprising an energy source (16) electrically connected to a fluid boiler (17), which in turn is connected via a high-temperature pipeline (12) to a pressure vessel (1) lined on the inside with a sealing jacket (2) and on the outside with a reinforced-concrete casing (4), the pressure vessel (1) being connected to a heat transport and distribution unit (18) by a high-temperature pipeline (12) and a low-temperature pipeline (15). During the heat extraction phase, the high-temperature pipeline (12) draws fluid from the pressure vessel (1), from which heat is transferred to heat consumers (19). This invention is characterized in that the sealing jacket (2) is monolithically integrated with the reinforced-concrete casing (4) via a connecting rib (3) permanently connected to the sealing jacket (2) and anchored in the bar reinforcement (6) of the reinforced-concrete casing (4).

## Description

The subject of the invention is a heating plant with thermal energy storage, in particular one based on renewable energy sources (RES), comprising a pressure vessel designed for the accumulation of heat in water under high pressure, characterized in that the sealing jacket of the pressure vessel is monolithically integrated with the reinforced-concrete casing via a connecting rib permanently connected to the sealing jacket and anchored in the bar reinforcement of the casing.

Various types of heating plants containing thermal energy storage systems are known, e.g., the one described in international patent application WO2024258747A2, which describes a thermal energy storage tank comprising an outer shell, a main chamber located within the outer shell, and a secondary chamber surrounding the main chamber and located within the outer shell. The main chamber may be filled with a heat-storage material, and the secondary chamber may be filled with an insulating material. Furthermore, the thermal energy storage tank may include one or more pipes extending through the outer shell into the main chamber, and one or more pipes may receive a flow of heated air to heat the heat storage material. However, the described solution does not address the use of a steel sealing jacket permanently integrated with the tank structure or a rigid, monolithic connection of this jacket to the prestressed reinforced-concrete casing. The absence of such an integration increases the risk of gaps and leaks forming under temperature changes and pressure loads, which in turn may lead to a drop in operating pressure, a loss of heat storage efficiency, and may also pose a threat to the safe operation of the tank.

In contrast, Chinese utility model CN202346221U describes a high-temperature, insulated storage tank with a steel body, a layer of insulating bricks, a stainless steel container for thermal fluid, a concrete base with a cooling pipeline, for storing solar heat at low cost and with high resistance to temperature changes. However, the presented solution does not describe the use of a steel sealing jacket permanently connected to the reinforced concrete structure or a prestressed casing cooperating with a metal shell, which, when operating under high pressure and in contact with a hot medium, poses a risk of corrosion, leaks, and a reduction in the tank's structural integrity.

In contrast, Chinese utility model CN217537182U describes a pressure tank for hydroelectric energy storage, which has a cylindrical, vertical structure with an axial through-channel connected to a water inlet at the top and a drain outlet at the bottom, where a flexible inner liner sealed with lantern rings enables water storage, and its outflow is assisted by pumping and the steam compression effect using a heating pipe, which increases the outlet pressure of the water stream. However, the presented solution does not include a rigid, steel sealing jacket integrated into the structure or a pressurized housing interacting with a steel jacket; the flexible sealing insert does not provide such high resistance to cyclic pressure and thermal loads, thereby increasing the risk of leakage, mechanical degradation, and reduced tank durability during long-term operation.

The objective of the invention was to develop a heating plant with a thermal energy storage facility located above or below ground that would be characterized by enhanced tightness of the pressure vessel, increased resistance to corrosion and cyclic thermal loads, as well as a durable structural bond between the steel sealing jacket and the reinforced-concrete casing, which will ultimately ensure high reliability and a long service life while maintaining safety and enabling operation under overpressure conditions that allow water temperatures above 100 °C. The aim was also to provide a large flow of thermal energy, preferably generated from renewable sources, despite their high variability over time and lack of synchronization with consumer demand.

The essence of the invention is a heating plant with thermal energy storage, comprising an energy source electrically connected to a fluid boiler, which in turn is connected via a high-temperature pipeline to a pressure vessel lined internally with a sealing jacket and externally surrounded by a reinforced-concrete casing, the pressure vessel being connected to a heat transport and distribution unit by a high-temperature pipeline and a low-temperature pipeline. This heating plant is characterized by the fact that the sealing jacket is monolithically integrated with the reinforced-concrete casing via a connecting rib permanently attached to the sealing jacket and anchored in the bar reinforcement of the reinforced-concrete casing.

It is preferable when the energy source is a renewable energy power plant.

It is advantageous if the gas permeability of the concrete of the reinforced-concrete casing is no more than 10 mD.

It is preferable for the reinforced-concrete casing to be made of prestressed concrete with additional bar reinforcement, where the prestressing cables are anchored in pilasters arranged circumferentially around the pressure vessel, and for the casing to be surrounded by a thermal insulation layer.

It is preferable when the horizontal prestressing cables and vertical prestressing cables are supported by supports integrated with the bar reinforcement.

It is preferable for the sealing jacket to be made of steel or steel alloys with a thickness of 2 to 40 mm.

It is desirable for the thermal insulation layer to be made of mineral wool with a thickness of 100 to 3000 mm and characterized by a thermal conductivity coefficient λ of no more than 0.035 W/(m·K).

Preferably, the fluid is water, and an inlet connection connected to a high-temperature pipeline is attached to the pressure vessel during the thermal energy storage charging phase, while during the discharging phase the flow is reversed.

A beneficial effect of the heating plant with thermal energy storage as described in the invention is the assurance of permanent tightness of the pressure vessel thanks to the monolithic integration of a steel sealing jacket with a prestressed reinforced-concrete casing, which enables the joint transfer of elastic deformations as well as thermal loads and internal-pressure loads, thereby increasing reliability and service life. Furthermore, it is advantageous to use a sealing jacket made of steel or its alloys, to install pressure vessels above or below ground, and to supply a large flow of thermal energy produced from renewable sources, despite their highly variable output over time and lack of synchronization with consumer demand.

An example of the invention's implementation is illustrated in the figure, where the individual figures represent:

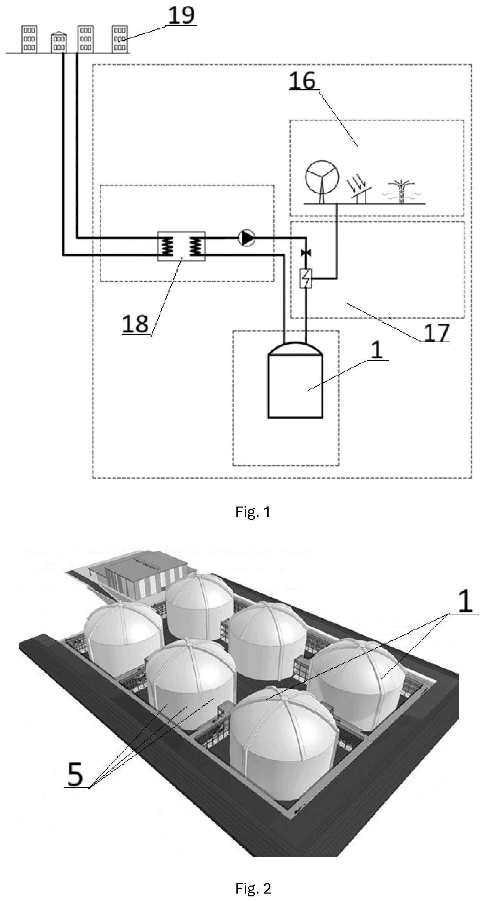

Fig. 1 - a schematic diagram of a heating plant with a thermal energy storage facility;
Fig. 2 - six pressure vessels, in an axonometric view;

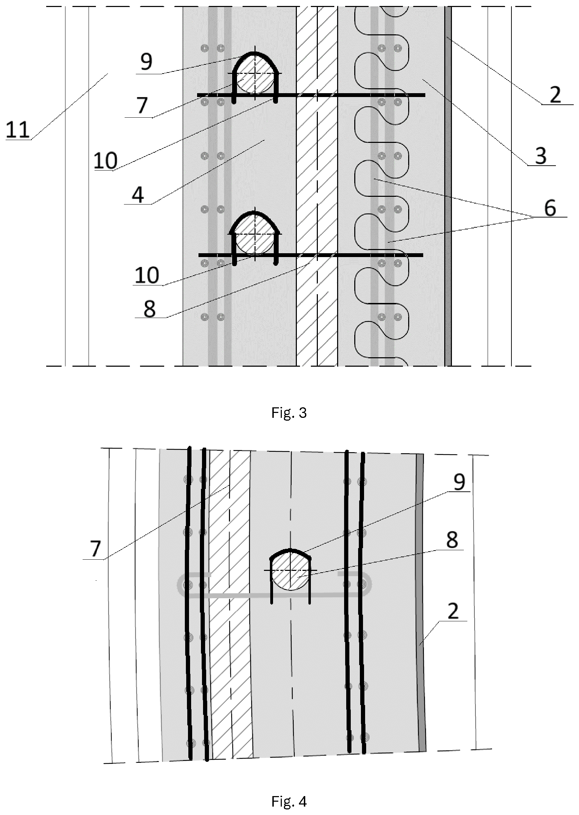

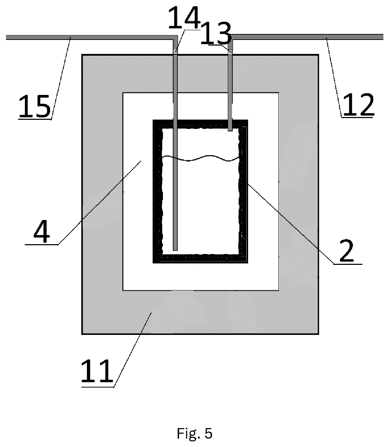

Figs. 3, 4, 5 - cross-sections of the pressure vessel;

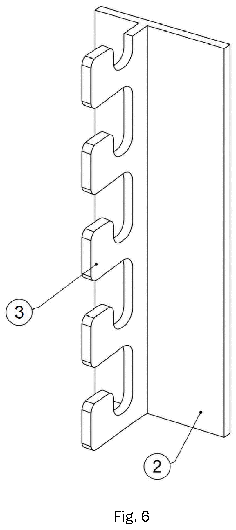

Fig. 6 - a detail of the connection between the sealing jacket and the connecting ribs, shown in an axonometric view.

In the example of the invention, the heating plant with a thermal energy storage facility includes a pressure vessel 1 with an internal diameter of 30 m, a total height of 24.7 m, and a spherical dome. The gas permeability of the concrete of the reinforced-concrete casing 4 is at most 10 mD.

The inner surface of pressure vessel 1 is lined with a steel sealing jacket 2 made of 20 mm thick P265GH boiler steel sheets. In another implementation example, the thickness of the sealing jacket 2 was 2 mm. The sheets were joined by welding. Steel connecting ribs 3, evenly spaced around the circumference, were welded to the outer side of the sealing jacket 2. The connecting ribs 3 are permanently attached to the steel sealing jacket 2 and protrude from its outer surface towards the reinforced-concrete casing 4. The shape of the connecting ribs 3 allows them to be anchored in the bar reinforcement 6 of the reinforced-concrete casing 4, so that, after the reinforced-concrete casing 4 has been formed, the steel sealing jacket 2 is monolithically integrated with the reinforced-concrete casing 4. This connection ensures that the steel sealing jacket 2 cooperates structurally with the reinforced-concrete casing 4 in transferring thermal loads and internal-pressure loads acting on the pressure vessel 1.

Pressure vessel 1 is surrounded by a reinforced-concrete casing 4 made of C50/60 prestressed concrete with a thickness of 730 mm, containing embedded bar reinforcement 6. The free ends of the connecting ribs 3 are anchored into the bar reinforcement 6, resulting in a monolithic connection between the sealing jacket 2 and the reinforced-concrete casing 4. The reinforced-concrete casing 4 also contains two prestressing systems made of high-carbon steel, anchored in the pilasters 5 arranged circumferentially around the pressure vessel 1: horizontal prestressing cables 7, which run circumferentially in rows, and vertical prestressing cables 8 running along the axis of each pilaster 5 as well as within the pressure vessel walls. The ends of the prestressing cables 7, 8 are fixed by anchors 9, and their path is defined by the location of the sheaths of the prestressing cables 7, 8 attached to the bar reinforcement 6. The horizontal prestressing cables 7 and vertical prestressing cables 8 are supported by supports 10 integrated with the bar reinforcement 6. After tensioning the prestressing cables 7, 8, compressive prestress was introduced into the concrete, which counteracts water pressure and internal pressure acting on the walls of the pressure vessel 1.

The outer surface of the reinforced-concrete casing 4 is covered with a 100-mm-thick layer of mineral wool thermal insulation 11 (λ = 0.035 W/(m·K)). In another implementation example, 3000-mm-thick mineral wool was used. The steel-concrete system formed in this way remains leak-tight at an operating pressure of 6 bar and a water temperature of approximately 150°C.

The heating plant with thermal energy storage operates on the principle of storing and releasing heat via a working medium-in this implementation example, high-pressure hot water.

Electricity is transmitted via a cable connection from energy source 16-in this example, a renewable energy source (RES)-specifically, wind turbines generating 10 MW of electricity-to the fluid boiler 17. It is also possible to utilize other RES sources, e.g., a solar collector system or a geothermal heating plant, a system of traditional power boilers operating on solid fuels, gas, or biomass, a combined heat and power (CHP) plant utilizing waste heat from electricity generation, as well as industrial heat exchangers that recover waste energy from industrial processes.

Fluid boiler 17 is an electrode boiler that heats water to a temperature above 100 °C, and this heated water flows through high-temperature pipeline 12 into pressure vessel 1 via inlet connection 13. There, it is stored under overpressure conditions that prevent boiling by maintaining the pressure above the saturation pressure of water at the storage temperature, while the thermal insulation limits heat losses. When heat is drawn off, the flow is reversed and the water flows out through connection 14 into the high-temperature pipeline 12, passes through the heat transport and distribution unit 18, where the stored thermal energy is made available as needed, and is then delivered to heat consumers 19, such as residential, industrial, or public buildings. In this example, the heating plant with thermal energy storage consists of six above-ground pressure vessels 1, interconnected by high-temperature pipelines 12 and low-temperature pipelines 15 connecting the pressure vessels 1, each with a nominal capacity of 10,500 m³ of water.

### List of components:

- 1: Pressure vessel
- 2: Sealing jacket
- 3: Connecting rib
- 4: Reinforced-concrete casing
- 5: Pilaster
- 6: Bar reinforcement of the reinforced-concrete casing 4
- 7: Horizontal prestressing cable
- 8: Vertical prestressing cable
- 9: Cable anchorage
- 10: Cable support
- 11: Thermal insulation layer
- 12: High-temperature pipeline
- 13: Inlet connection (charging phase) / outlet connection (discharging phase)
- 14: Outlet connection (charging phase) / inlet connection (discharging phase)
- 15: Low-temperature pipeline
- 16: Energy source
- 17: Fluid boiler
- 18: Heat transport and distribution unit
- 19: Heat consumers

## Claims

1. A heating plant with a thermal energy storage facility, comprising an energy source (16) electrically connected to a fluid boiler (17), which in turn is connected via a high-temperature pipeline (12) to a pressure vessel (1) lined on the inside with a sealing jacket (2), and on the outside by a reinforced-concrete casing (4), the pressure vessel (1) being connected to a heat transport and distribution unit (18) by a high-temperature pipeline (12) and a low-temperature pipeline (15), **characterized in that** the sealing jacket (2) is monolithically integrated with the reinforced-concrete casing (4) via a connecting rib (3) permanently connected to the sealing jacket (2) and anchored in the bar reinforcement (6) of the reinforced-concrete casing (4).

2. A heating plant according to claim 1, **characterized in that** the energy source (16) is a renewable energy power plant.

3. A heating plant according to claim 1 or 2, **characterized in that** the gas permeability of the concrete of the reinforced-concrete casing (4) is at most 10 mD.

4. A heating plant according to any of claims 1 to 3, **characterized in that** the reinforced-concrete casing (4) is made of prestressed concrete with bar reinforcement (6), where the prestressing cables (7, 8) cooperating with the bar reinforcement (6) are anchored in pilasters (5) arranged circumferentially around the pressure vessel (1), and the reinforced-concrete casing (4) is surrounded by a thermal insulation layer (11).

5. A heating plant according to any of claims 1 to 4, **characterized in that** the horizontal prestressing cables (7) and vertical prestressing cables (8) are supported by supports (10) integrated with the bar reinforcement (6).

6. A heating plant according to any of claims 1 to 5, **characterized in that** the sealing jacket (2) is made of steel or its alloys with a thickness of 2 to 40 mm.

7. A heating plant according to any of claims 1 to 6, **characterized in that** the thermal insulation layer (11) is made of mineral wool with a thickness of 100 to 3000 mm and has a thermal conductivity coefficient λ of no more than 0.035 W/(m·K).

8. A heating plant according to any of claims 1 to 7, **characterized in that** the fluid is water, and an inlet connection (13) connected to a high-temperature pipeline (12) and an outlet connection (14) connected to a low-temperature pipeline (15) are provided.
